# FASCICULE DE BREVET EUROPEEN

(11) **EP 0 838 673 B1**
(45) Date de publication et mention de la délivrance du brevet: **05.03.2003**
(21) Numéro de dépôt: 97402291.5
(22) Date de dépôt: 01.10.1997
(51) Int. Cl.: G01M 5/00

(54) **Dispositif de simulation des efforts aérodynamiques appliqués sur deux gouvernes orientables d'un engin tel qu'un missile**
Vorrichtung zur Simulation der Luftkräfte auf zwei lenkbaren Steuerflächen wie z.B. eines Flugkörpers
Device for simulating the aerodynamic forces applied on two orientable aerodynamic surfaces of a vehicle such as a missile

(30) Priorité: 03.10.1996 FR 9612063
(43) Date de publication de la demande: 29.04.1998
(73) Titulaire: European Aeronautic Defence and Space Company - EADS France, 75016 Paris (FR)
(72) Inventeur: Petit, Patrick, 95200 Herblay (FR); Mahoux, Alain, 91300 Massy (FR)
(74) Mandataire: Poulin, Gérard

(56) Documents cités:
- US-A- 4 235 103
- DATABASE WPI Section EI, Week 9624 Derwent Publications Ltd., London, GB; Class S02, AN 96-238045 XP002032935 & RU 2 045 750 C (AVIAT RES TECH COMPLEX) , 10 octobre 1995

## Description

### Domaine technique

L'invention concerne un dispositif permettant de simuler les efforts aérodynamiques qui sont appliqués sur deux gouvernes aptes à être braquées autour de deux axes de pivotement sécants, lors du vol d'un engin comportant ces gouvernes.

Le dispositif selon l'invention peut être utilisé pour simuler les efforts aérodynamiques appliqués simultanément sur les gouvernes d'un engin tel qu'un missile muni de deux gouvernes orientables autour de deux axes de pivotement sécants formant entre eux un angle prédéterminé.

Par ailleurs, si le dispositif selon l'invention est conçu pour simuler les efforts aérodynamiques appliqués sur les gouvernes d'un engin apte à se déplacer dans l'air, il peut aussi être utilisé pour simuler les efforts hydrodynamiques appliqués sur les gouvernes d'un engin se déplaçant dans le fluide. Par conséquent, l'expression "effort aérodynamique" ne doit pas être considérée comme limitant la portée de l'invention au cas d'un engin se déplaçant dans l'air.

### Etat de la technique

Comme l'illustre le document FR-A-2 213 870 ou le document US-A-4 235 103, il est connu de simuler les efforts aérodynamiques appliqués sur les gouvernes d'un avion, au moyen d'un système pneumatique relativement complexe.

En revanche, il n'existe pas actuellement de dispositif permettant de simuler de façon simple les efforts aérodynamiques qui sont appliqués en vol sur les gouvernes d'un engin, susceptibles d'être braquées autour de deux axes de pivotement sécants formant entre eux un angle déterminé.

Par conséquent, sur un engin de ce type le comportement des systèmes de commande des gouvernes ne peut être testé actuellement que lors d'un vol réel. Lorsque ce comportement est défaillant, cela conduit à la perte de l'engin, sans qu'il soit toujours possible de connaître les causes de la défaillance. Dans ces conditions, une amélioration de la commande des gouvernes ne peut être obtenue qu'au prix d'un grand nombre d'essais, ce qui augmente de façon considérable le coût de la mise au point de l'engin.

Par conséquent, il est souhaitable de pouvoir reconstituer en laboratoire l'environnement mécanique et thermique de l'engin lorsque les systèmes de commande des gouvernes sont actionnés. Or, si les vibrations de vol ainsi que l'échauffement cinétique peuvent être reconstitués au moyen d'un outillage générateur de vibrations muni d'excitateurs et au moyen de fours équipés de tubes infrarouges, la simulation des efforts aérodynamiques pose des problèmes particulièrement délicats à résoudre.

### Exposé de l'invention

L'invention a précisément pour objet un dispositif permettant de simuler les efforts aérodynamiques appliqués sur deux gouvernes d'un engin, aptes à être braquées autour de deux axes de pivotement sécants, par des moyens purement mécaniques particulièrement simples, permettant de dissocier la simulation des efforts dus aux couples aérodynamiques induits par le braquage des gouvernes de la simulation des efforts dus à la portance aérodynamique des gouvernes.

Conformément à l'invention, ce résultat est obtenu au moyen d'un dispositif de simulation des efforts aérodynamiques appliqués sur deux gouvernes d'un engin, montées sur deux axes de pivotement sécants formant entre eux un angle prédéterminé, de façon à pouvoir être braquées en tournant autour de ces axes, caractérisé par le fait qu'il comprend :
- deux pièces d'ancrage, aptes à être fixées sur les gouvernes ;
- deux pièces intermédiaires, montées libres en rotation sur les pièces d'ancrage, autour des axes de pivotement ;
- deux pièces de reprise d'efforts, articulées sur les pièces intermédiaires par des axes d'articulation perpendiculaires et sécants aux axes de pivotement ;
- des moyens anti-rotation, interposés entre les pièces de reprise d'efforts, de façon à s'opposer à une rotation relative de celles-ci autour d'un axe longitudinal passant par les points d'intersection des axes de pivotement et des axes d'articulation ;
- un moyen de mise en tension, interposé entre les pièces de reprise d'efforts, de façon à pouvoir exercer sur celles-ci, selon ledit axe longitudinal, un effort de traction réglable simulant une portance aérodynamique ; et
- deux moyens d'application de couples résistants proportionnels à des angles de braquage des gouvernes autour de leurs axes de pivotement, simulant des couples aérodynamiques dus à ces angles de braquage, ces moyens étant interposés entre les pièces d'ancrage et les pièces intermédiaires.

Dans une forme de réalisation préférentielle de l'invention, le moyen de mise en tension comprend un ridoir qui coopère par deux filetages avec deux ensembles reliés aux pièces de reprise d'efforts, par des moyens autorisant une translation selon l'axe longitudinal et s'opposant à une rotation autour de cet axe, et deux empilements de rondelles Belleville, par lesquels les ensembles précités prennent appui sur les pièces de reprise d'efforts.

Le contrôle de l'effort de traction exercé par ce moyen de mise en tension peut notamment être réalisé en équipant le ridoir de jauges d'extensométrie.

Dans la forme de réalisation préférentielle de l'invention, les moyens anti-rotation comprennent deux barres situées de part et d'autre du moyen de mise en tension, orientées parallèlement audit axe longitudinal, et reliant les pièces de reprise d'efforts de façon à pouvoir coulisser librement dans au moins l'une de ces pièces.

Par ailleurs, chaque moyen d'application de couples résistants comprend de préférence deux éléments liés l'un à l'autre en rotation par l'intermédiaire de blocs élastomères, ces éléments étant immobilisés respectivement en rotation par rapport à l'une des pièces d'ancrage et par rapport à l'une des pièces intermédiaires.

Les deux éléments de chaque moyen d'application de couples résistants comprennent avantageusement un bloc central et un cadre extérieur, tous deux de section carrée. Le bloc central et le cadre extérieur sont décalés angulairement de 45° dans une position neutre du moyen d'application de couples résistants, dans laquelle aucun couple n'est appliqué. Quatre blocs élastomères de forme triangulaire sont interposés entre le cadre extérieur et le bloc central.

Par ailleurs, les pièces d'ancrage comprennent de préférence des tourillons centrés sur les axes de pivotement. Les blocs centraux sont alors fixés aux extrémités de ces tourillons et les pièces intermédiaires sont des pièces en forme de couronnes montées sur les tourillons et auxquelles les cadres extérieurs sont liés en rotation.

Les pièces intermédiaires en forme de couronnes comportent avantageusement deux méplats parallèles et opposés, sur lesquels font saillie des broches alignées sur les axes d'articulation. Les pièces de reprise d'efforts sont alors des pièces en forme de chapes qui comportent deux plaques parallèles dont les extrémités sont montées pivotantes sur les broches précitées.

Dans la forme de réalisation préférentielle de l'invention, les pièces d'ancrage comprennent des parties en forme de U, aptes à venir chevaucher les gouvernes, et des vis calibrées traversant ces parties en forme de U, pour venir en appui contre les gouvernes, par leurs extrémités.

### Brève description des dessins

On décrira à présent, à titre d'exemple non limitatif, une forme de réalisation préférentielle de l'invention, en se référant aux dessins annexés, dans lesquels :
la figure 1 est une vue de côté, partiellement en coupe, qui représente un dispositif de simulation conforme à l'invention, monté sur les deux gouvernes d'un engin dont seul le contour est représenté en traits mixtes, une partie du dispositif étant également illustrée en traits mixtes pour ne pas surcharger le dessin ;
la figure 2 est une vue en coupe à plus grande échelle selon la ligne II-II de la figure 1 ; et
la figure 3 est une vue selon la flèche 3 de la figure 1.

### Exposé détaillé d'une forme de réalisation préférentielle

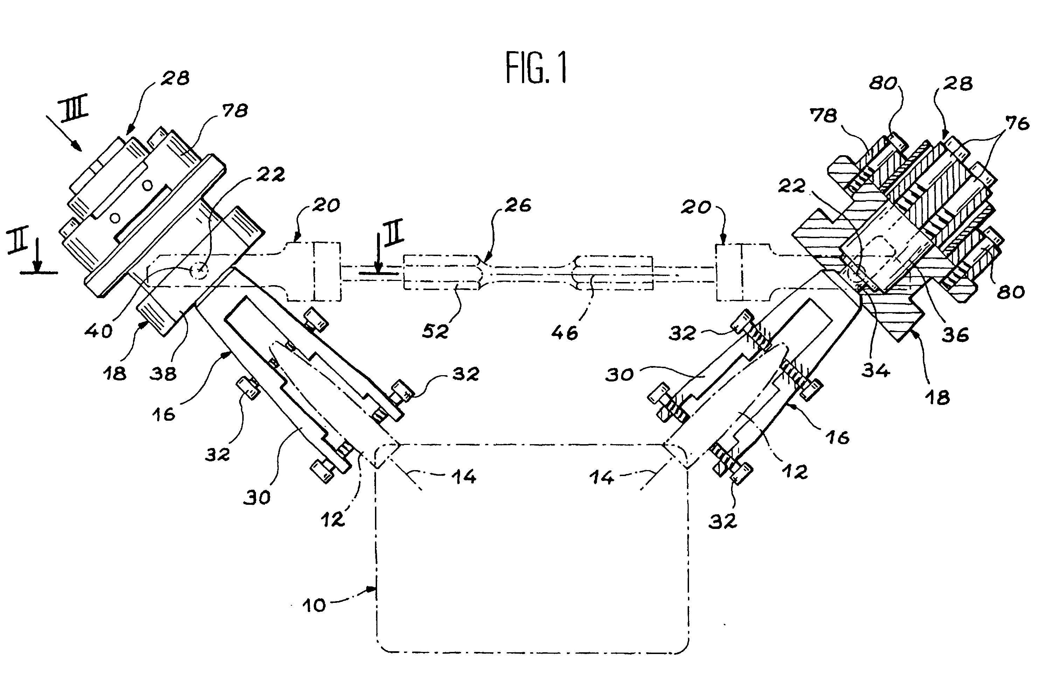

Sur la figure 1, on a représenté en traits mixtes le contour d'un engin 10 tel qu'un missile, observé en section transversale au droit de deux gouvernes 12 de cet engin. Chacune des gouvernes 12 est montée sur l'engin 10 de façon à pouvoir être braquée indépendamment en tournant autour d'un axe de pivotement 14. De façon plus précise, les axes de pivotement 14 des deux gouvernes 12 sont placés dans la même section transversale de l'engin 10 et ils sont sécants de façon à former entre eux un angle prédéterminé, par exemple d'environ 90°. D'autres valeurs peuvent toutefois être données à l'angle formé entre les axes de pivotement 14 des gouvernes 12, sans sortir du cadre de l'invention.

En l'absence de braquage (figure 1), le plan médian de chacune des gouvernes 12 est parallèle à l'axe longitudinal de l'engin 10. Par rapport à la position neutre ainsi définie, chacune des gouvernes 12 peut être braquée, par exemple, d'environ 15° dans un sens ou dans l'autre. La plage de braquage des gouvernes 12 peut toutefois être différente de cette valeur, sans sortir du cadre de l'invention.

Pour permettre le braquage des gouvernes 12 autour de leurs axes de pivotement 14, l'engin 10 comporte un système de commande de braquage (non représenté) associé à chacune des gouvernes. Chaque système de commande de braquage comprend habituellement au moins un vérin de commande ainsi qu'un circuit hydraulique d'actionnement de ce vérin, piloté par un boîtier électronique.

Afin de simuler en laboratoire les efforts aérodynamiques qui sont appliqués sur les gouvernes 12 lorsque l'engin 10 est en vol, on utilise, conformément à l'invention, un dispositif de simulation totalement mécanique, dont une forme de réalisation préférentielle va à présent être décrite en se référant aux figures 1 à 3.

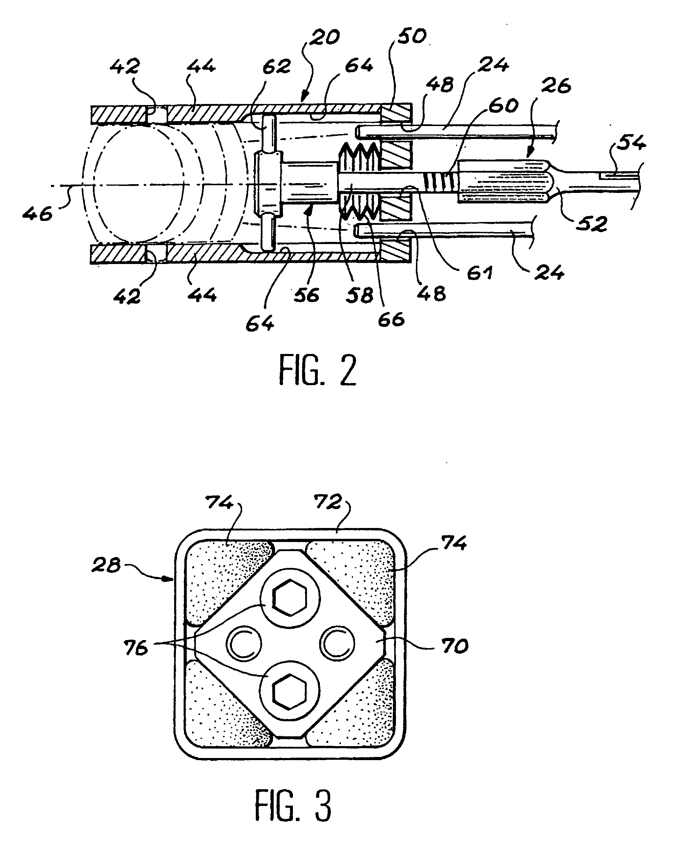

Pour l'essentiel, le dispositif de simulation selon l'invention comprend deux pièces d'ancrage 16, prévues pour être fixées sur les gouvernes 12, deux pièces intermédiaires 18, montées libres en rotation sur les pièces d'ancrage 16, autour des axes de pivotement 14, deux pièces 20 de reprise d'efforts, articulées sur les pièces intermédiaires 18 par des axes d'articulation 22 parallèles entre eux et perpendiculaires et sécants aux axes de pivotement 14, des moyens anti-rotation 24 (figure 2) s'opposant à une rotation relative entre les pièces 20 de reprise d'efforts, un moyen 26 de mise en tension, appliquant un effort de traction réglable entre les pièces 20 de reprise d'efforts 20 et deux moyens 28 d'application de couples résistants, appliquant sur chacune des gouvernes 12 un couple résistant proportionnel à l'angle de braquage de celles-ci. Il est à noter que le dispositif est parfaitement symétrique, ce qui signifie que les pièces d'ancrage 16, les pièces intermédiaires 18, les pièces 20 de reprise d'efforts et les moyens 28 d'application de couples résistants sont identiques les uns aux autres.

Pour permettre leur fixation sur chacune des gouvernes 12, chaque pièce d'ancrage 16 comprend une partie 30, en forme de U qui chevauche la gouverne 12 correspondante lorsque le dispositif de simulation est mis en place. Les deux branches terminales de la partie 30 en forme de U sont alors placées de part et d'autre de la gouverne 12 et cette dernière est bloquée au moyen de vis calibrées 32 traversant ces branches terminales. Plus précisément, les vis 32 sont vissées dans les branches terminales de la partie 30 en forme de U, et leurs extrémités sont en contact avec les gouvernes 12 lorsque le blocage est réalisé.

Chacune des pièces d'ancrage 16 comprend de plus un tourillon 34, réalisé d'un seul tenant avec la partie 30 en forme de U de façon à faire saillie vers l'extérieur à partir de la branche intermédiaire du U, comme on l'a illustré sur la moitié droite de la figure 1. Lorsque les pièces d'ancrage 16 sont fixées sur les gouvernes 12 à l'aide des vis calibrées 32, les axes géométriques des tourillons 34 sont confondus avec les axes de pivotement 14 des gouvernes 12.

Chacune des pièces intermédiaires 18 a la forme d'une couronne qui est supportée'par le tourillon 34 de la pièce d'ancrage 16 correspondante, de façon à être liée en translation à cette pièce selon l'axe de pivotement 14, tout en étant libre en rotation autour de cet axe. Cette caractéristique peut notamment être obtenue en interposant un roulement à billes (non représenté) entre la pièce intermédiaire 18 et le tourillon 34 qui la supporte. Une pièce d'adaptation cylindrique 36 est fixée à l'extrémité du tourillon 34 correspondant, par tout moyen approprié tel que par vissage, afin d'immobiliser la pièce intermédiaire 18 en rotation et en translation par rapport à la pièce d'ancrage 16.

Sur son extrémité attenante à la partie 30 en forme de U de la pièce d'ancrage 16 correspondante, chacune des pièces intermédiaires 18 présente une surface extérieure cylindrique, sur laquelle sont formés deux méplats 38 opposés et parallèles. Des broches 40 alignées, matérialisant les axes d'articulation 22, font saillie sur les méplats 38.

Comme l'illustre plus précisément la figure 2, la pièce 20 de reprise d'efforts présente la forme d'une chape. Elle est formée par l'assemblage de deux plaques parallèles 44, formant les flancs de la chape, et d'une plaque de fond 50.

L'écartement entre les deux plaques parallèles 44 est égal à l'écartement entre les deux méplats 38, aux jeux fonctionnels près. Des perçages 42 sont formés dans les plaques 44, à proximité de leurs extrémités opposées à la plaque de fond 50. Les deux broches 40 portées par chacune des pièces intermédiaires 18 pénètrent dans les perçages 42, de façon à autoriser un pivotement relatif entre les pièces intermédiaires 18 et les pièces 20 de reprise d'efforts qui leur correspondent, autour des axes d'articulation 22.

Comme l'illustrent les figures 1 et 2, les pièces 20 de reprise d'efforts sont reliées à la fois par le moyen 26 de mise en tension et par les moyens anti-rotation 24, de telle sorte qu'un effort de traction réglable est appliqué entre les pièces 20 et que celles-ci sont immobilisées en rotation l'une par rapport à l'autre, autour d'un axe longitudinal 46 passant par les points d'intersection des axes de pivotement 14 et des axes d'articulation 22.

De façon plus précise et comme l'illustre la figure 2, les moyens anti-rotation comprennent deux barres 24, droites et cylindriques, situées de part et d'autre du moyen 26 de mise en tension et orientées parallèlement à l'axe longitudinal 46. Ces barres 24 traversent librement des alésages 48 usinés dans la plaque de fond 50 de chacune des pièces 20 de reprise d'efforts.

Cet agencement autorise une modification de la distance séparant les deux pièces 20 de reprise d'efforts, tout en s'opposant à une rotation relative entre ces pièces autour de l'axe longitudinal 46, quel que soit l'angle de braquage des gouvernes 12. Etant donné que les pièces 20 coopèrent avec les pièces intermédiaires 18 par les méplats 38 et les axes d'articulation 22, toute rotation relative entre les pièces 18, autour de l'axe longitudinal 46, est ainsi empêchée.

Dans la forme de réalisation préférentielle illustrée sur les figures 1 et 2, le moyen 26 de mise en tension comprend un ridoir 52 disposé entre les pièces de reprise d'efforts 20, selon l'axe longitudinal 46. Ce ridoir 52 est réalisé d'un seul tenant et comporte une partie centrale de section réduite, portant un pont de jauges d'extensométrie 54. Les deux extrémités du ridoir 52 présentant un profil extérieur, par exemple hexagonal, permet de faire tourner le ridoir 52 dans un sens ou dans l'autre autour de l'axe longitudinal 46, à l'aide d'une clé.

Le moyen 26 de mise en tension comprend de plus deux ensembles 56 identiques dont l'un est représenté en détail sur la figure 2. Chaque ensemble 56 comprend une tige 58 prévue pour être disposée selon l'axe longitudinal 46 et dont une extrémité est munie d'un filetage 60, vissé dans un trou taraudé (non représenté) formé axialement dans l'extrémité correspondante du ridoir 52. Plus précisément, les filetages 60 des deux ensembles 56 sont tels que ces ensembles se rapprochent ou s'éloignent l'un de l'autre, selon que l'on fait tourner le ridoir 52 dans l'un ou l'autre sens autour de l'axe longitudinal 46.

La tige 58 de chacun des ensembles 56 traverse librement un troisième alésage 61 usiné dans la plaque de fond 50 de la pièce 20 de reprise d'efforts correspondante. A son extrémité opposée au filetage 60, la tige 58 porte une goupille 62, orientée perpendiculairement à l'axe longitudinal 46, de façon à former un T avec cette tige 58. Les extrémités de la goupille 62 sont reçues dans des rainures 64 usinées sur les surfaces intérieures des plaques parallèles 44 de la pièce 20 de reprise d'efforts correspondante. Plus précisément, les rainures 64 sont orientées parallèlement à l'axe longitudinal 46.

Cet agencement permet à l'ensemble 56 de pouvoir se déplacer librement dans la pièce 20 de reprise d'efforts qui lui correspond, selon l'axe longitudinal 46, tout en étant immobilisé en rotation autour de cet axe, par rapport à la pièce 20.

Le moyen 26 de mise en tension comprend enfin deux empilements de rondelles Belleville 66 qui sont montés sur chacune des tiges 58, à l'intérieur de la pièce 20 de reprise d'efforts qui lui correspond, entre la plaque de fond 50 et un épaulement 68 formé sur la tige 58.

Grâce à l'agencement qui vient d'être décrit, on comprend que lorsqu'un opérateur fait tourner le ridoir 52 dans le sens correspondant au rapprochement ou à l'éloignement des deux ensembles 56, il augmente ou il diminue, selon le cas, la compression des deux ensembles de rondelles Belleville 66. Par conséquent, cette action sur le ridoir 52 permet d'appliquer simultanément sur les deux gouvernes 12 une force de traction réglable, dont la valeur peut être mesurée à l'aide du pont de jauges dynamométriques 54 porté par le ridoir. On simule ainsi la portance aérodynamique appliquée en vol sur les gouvernes 12.

L'utilisation des empilements de rondelles Belleville 66 permet de donner au système une raideur souple, telle que l'effort de traction appliqué entre les gouvernes soit aussi constant que possible lorsque les gouvernes sont simultanément soumises à des vibrations engendrées par un système (non représenté) extérieur au dispositif de l'invention, pour reconstituer plus complètement les conditions de vol de l'engin 10.

Comme l'illustrent les figures 1 et 3, les deux moyens 28 d'application de couples résistants sont identiques et comprennent chacun deux éléments rigides, constitués respectivement par un bloc central 70 et par un cadre extérieur 72, ainsi que des éléments déformables constitués par quatre blocs élastomères 74 interposés entre les deux éléments rigides 70 et 72.

De façon plus précise, le bloc central 70 présente une forme carrée en section transversale et le cadre extérieur 72, qui entoure le bloc central 70, présente également une section carrée. Comme on le voit sur la figure 3, qui représente un moyen 28 d'application de couples dans sa position neutre, dans laquelle aucun couple n'est appliqué, les carrés formés par le bloc central 70 et par le cadre extérieur 72 sont alors décalés angulairement de 45°. Les quatre blocs élastomères 74, en forme de triangle isocèle, remplissent les espaces qui sont formés entre chacun des côtés du carré formé en section par le bloc central 70 et la partie attenante du cadre extérieur 72.

Les moyens 28 d'application de couples résistants qui viennent d'être décrits peuvent notamment être constitués par des dispositifs du commerce, tels que ceux qui sont commercialisés sous la marque "ROSTA".

On comprend que l'introduction d'un décalage angulaire entre les éléments 70 et 72 crée un couple résistant dont la valeur est proportionnelle à la valeur du décalage angulaire initial. Comme l'illustre la figure 1, cette caractéristique est utilisée dans le dispositif selon l'invention, pour simuler le couple aérodynamique engendré par le braquage des gouvernes 12 autour de leurs axes de pivotement 14.

A cet effet, le bloc central 70 de chacun des moyens 28 d'application de couples résistants est fixé sur la face d'extrémité de la pièce d'adaptation cylindrique 36 opposée à la pièce d'ancrage 16, par exemple au moyen de vis 76. Du fait de cette fixation, le bloc central 70 est entraîné en rotation par la gouverne 12 autour de l'axe de pivotement 14, par l'intermédiaire de la pièce d'ancrage 16 et de la pièce d'adaptation cylindrique 36, lorsque la gouverne est braquée.

Par ailleurs, le cadre extérieur 72 de chacun des moyens 28 d'application de couples résistants est immobilisé en rotation. A cet effet, on monte autour du cadre 72 une bague 78 dont le trou central est complémentaire du profil extérieur carré du cadre 72, et on fixe cette bague 78 sur la face de la pièce intermédiaire 18 correspondante opposée à la pièce d'ancrage 16, par exemple au moyen de vis 80. Les vis 80 traversent alors une partie terminale en forme de bride, de la pièce intermédiaire 18. Etant donné que les pièces intermédiaires 18 sont elles-mêmes immobilisées en rotation par les pièces 20 de reprise d'efforts et les barres 24 interposées entre ces pièces, toute rotation du cadre extérieur 72 de chacun des moyens 28 d'application de couples résistants est rendue impossible.

Le dispositif de simulation qui vient d'être décrit en se référant aux figures 1 à 3 permet d'appliquer simultanément et de façon indépendante sur chacune des gouvernes 12 un couple résistant proportionnel à l'angle de braquage de la gouverne autour de son axe de pivotement 14, ainsi qu'un effort de traction de valeur réglable. Le couple résistant appliqué sur chacune des gouvernes simule le couple aérodynamique exercé sur cette gouverne du fait de son braquage. L'effort de traction exercé entre les gouvernes simule la portance aérodynamique. Une étude du fonctionnement en vol des gouvernes et de leurs systèmes de commande peut ainsi être faite en laboratoire, de façon simulée.

Bien entendu, l'invention n'est pas limitée à la forme de réalisation décrite. En particulier, le moyen 26 de mise en tension et les moyens 28 d'application de couples résistants peuvent être remplacés par tous moyens techniquement équivalents remplissant les mêmes fonctions et procurant des résultats comparables.

## Revendications

1. Dispositif de simulation des efforts aérodynamiques appliqués sur deux gouvernes (12) d'un engin (10), montées sur deux axes de pivotement sécants (14) formant entre eux un angle prédéterminé, de façon à pouvoir être braquées en tournant autour de ces axes, **caractérisé par le fait qu'**il comprend :
- deux pièces d'ancrage (16), aptes à être fixées sur les gouvernes (12) ;
- deux pièces intermédiaires (18), montées libres en rotation sur les pièces d'ancrage (16), autour des axes de pivotement (14) ;
- deux pièces (20) de reprise d'efforts, articulées sur les pièces intermédiaires (18) par des axes d'articulation (22) perpendiculaires et sécants aux axes de pivotement (14) ;
- des moyens anti-rotation (24), interposés entre les pièces (20) de reprise d'efforts, de façon à s'opposer à une rotation relative de celles-ci autour d'un axe longitudinal (46) passant par les points d'intersection des axes de pivotement (14) et des axes d'articulation (22) ;
- un moyen (26) de mise en tension, interposé entre les pièces (20) de reprise d'efforts, de façon à pouvoir exercer sur celles-ci, selon ledit axe longitudinal (46), un effort de traction réglable simulant une portance aérodynamique ; et
- deux moyens (28) d'application de couples résistants proportionnels à des angles de braquage des gouvernes (12) autour de leurs axes de pivotement (14), simulant des couples aérodynamiques dus à ces angles de braquage, ces moyens (28) étant interposés entre les pièces d'ancrage (16) et les pièces intermédiaires (18).

2. Dispositif selon la revendication 1, dans lequel le moyen (26) de mise en tension comprend un ridoir (52) qui coopère par deux filetages (60) avec deux ensembles (56) reliés aux pièces (20) de reprise d'efforts, par des moyens (62,64) autorisant une translation selon l'axe longitudinal (46) et s'opposant à une rotation autour de cet axe, et deux empilements de rondelles Belleville (66), par lesquels les ensembles (56) prennent appui sur les pièces (20) de reprise d'efforts.

3. Dispositif selon la revendication 2, dans lequel le ridoir (52) porte des jauges d'extensométrie (54).

4. Dispositif selon l'une quelconque des revendications précédentes, dans lequel les moyens anti-rotation comprennent deux barres (24) situées de part et d'autre du moyen (26) de mise en tension, orientées parallèlement audit axe longitudinal (46), et reliant les pièces (20) de reprise d'efforts de façon à pouvoir coulisser librement dans au moins l'une de ces pièces.

5. Dispositif selon l'une quelconque des revendications précédentes, dans lequel chaque moyen (28) d'application de couples résistants comprend deux éléments (70, 72) liés l'un à l'autre en rotation par l'intermédiaire de blocs élastomères (74), ces éléments étant immobilisés respectivement en rotation par rapport à l'une des pièces d'ancrage (16) et par rapport à l'une des pièces intermédiaires (18).

6. Dispositif selon la revendication 5, dans lequel les deux éléments comprennent un bloc central (70) et un cadre extérieur (72), tous deux de section carrée, décalés angulairement de 45° dans une position neutre du moyen (28) d'application de couples résistants, dans laquelle aucun couple n'est appliqué, quatre blocs élastomères (74) de forme triangulaire étant interposés entre le cadre extérieur et le bloc central.

7. Dispositif selon la revendication 6, dans lequel les pièces d'ancrage (16) comprennent des tourillons (34) centrés sur les axes de pivotement (14), les blocs centraux (70) étant fixés aux extrémités de ces tourillons, les pièces intermédiaires (18) étant en forme de couronnes et montées sur les tourillons (34), et les cadres extérieurs (72) étant liés en rotation aux pièces intermédiaires.

8. Dispositif selon la revendication 7, dans lequel les pièces intermédiaires (18) en forme de couronne comportent deux méplats (38) parallèles et opposés sur lesquels font saillie des broches (40) alignées sur les axes d'articulation (22), les pièces (20) de reprise d'efforts étant en forme de chapes et comportant deux plaques parallèles (44) dont les extrémités sont montées pivotantes sur lesdites broches.

9. Dispositif selon l'une quelconque des revendications précédentes, dans lequel les pièces d'ancrage (16) comprennent des parties (30) en forme de U, aptes à venir chevaucher les gouvernes, et des vis calibrées (32) traversant ces parties en forme de U, pour venir en appui contre les gouvernes par leurs extrémités.

## Claims

1. A device for simulating the aerodynamic forces applied to two control surfaces (12) of a craft (10), which are mounted on two secant pivot axes (14) forming a predetermined angle between them in such a way that they can be changed in direction by turning about said axes, **characterised in that** it comprises:
- two anchoring members (16) capable of being fixed on the control surfaces (12);
- two intermediate members (18) mounted freely rotatably on the anchoring members (16) about the pivot axes (14);
- two force transmission members (20) pivotably mounted to the intermediate members (18) by pivot mounting axes (22) which are perpendicular and secant with respect to the pivot axes (14);
- rotation-preventing means (24) interposed between the force transmission members (20) so as to resist relative rotation thereof about a longitudinal axis (46) passing through the points of intersection of the pivot axes (14) and the pivot mounting axes (22);
- a tensioning means (26) interposed between the force transmission members (20) in such a way that it can apply thereto along said longitudinal axis (46) a regulatable tensile force simulating an aerodynamic lift; and
- two means (28) for applying resisting torques which are proportional to angles of rotational movement of the control surfaces (12) about their pivot axes (14), simulating aerodynamic torques due to said angles of rotational movement, said means (28) being interposed between the anchoring members (16) and the intermediate members (18).

2. A device according to claim 1 wherein the tensioning means (26) comprises a turnbuckle (52) co-operating by means of two screwthreads (60) with two assemblies (56) connected to the force transmission members (20), by means (62, 64) permitting a translatory movement along the longitudinal axis (46) and resisting a rotary movement about said axis, and two stacks of Belleville washers (66), by means of which the assemblies (56) bear against the force transmission members (20).

3. A device according to claim 2 wherein the turnbuckle (52) bears extension strain gauges (54).

4. A device according to any one of the preceding claims wherein the rotation-preventing means comprise two bars (24) disposed on respective sides of the tensioning means (26) and oriented in parallel relationship with said longitudinal axis (46) and connecting the force transmission members (20) in such a way that they can slide freely in at least one of said members.

5. A device according to any one of the preceding claims wherein each means (28) for applying resisting torques comprises two elements (70, 72) connected together in respect of rotation by way of elastomer blocks (74), said elements being respectively immobilised in respect of rotation with respect to one of the anchoring members (16) and with respect to one of the intermediate members (18).

6. A device according to claim 5 wherein the two elements comprise a central block (70) and an external frame (72), both of square section, which are angularly displaced through 45° in a neutral position of the means (28) for applying resisting torques, in which position no torque is applied, four elastomer blocks (74) of triangular shape being interposed between the external frame and the central block.

7. A device according to claim 6 wherein the anchoring members (16) comprise trunnions (34) centred on the pivot axes (14), the central blocks (70) being fixed to the ends of said trunnions, the intermediate members (18) being in the form of rings and mounted on the trunnions (34) and the external frames (72) being connected in respect of rotation to the intermediate members.

8. A device according to claim 7 wherein the ring-shaped intermediate members (18) comprise two opposite parallel flats (38) from which project pins (40) aligned with the pivot mounting axes (22), the force transmission members (20) being in the form of forks and comprising two parallel plates (44), the ends of which are mounted pivotably on said pins.

9. A device according to any one of the preceding claims wherein the anchoring members (16) comprise U-shaped portions (30) which are capable of fitting astride the control surfaces, and calibrated screws (32) passing through said U-shaped portions to come to bear against the control surfaces by way of their ends.

## Patentansprüche

1. Vorrichtung zur Simulation der aerodynamischen Kräfte, die auf zwei Steuerflächen (12) eines Flugkörpers (1) wirken, die auf zwei sich schneidende Achsen (14) montiert sind, welche zwischen sich einen bestimmten Winkel bilden, so dass sie geschwenkt werden können, indem man sie um diese Achsen dreht,
**dadurch gekennzeichnet, dass** sie umfasst:
- zwei Verankerungsstücke (16), die an den Steuerflächen (12) befestigt werden können;
- zwei Zwischenstücke (18), um die Schwenkachsen (14) frei drehbar auf die Verankerungsstücken (16) montiert; '
- zwei Kraftaufnahmestücke (20), angelenkt an den Zwischenstücken (18) durch Gelenkachsen (22), die zu den Schwenkachsen (14) senkrecht sind und sie schneiden;
- Antirotationseinrichtungen (24), eingefügt zwischen die Kraftaufnahmestücke (20), um einer Relativdrehung zwischen diesen beiden um eine Längsachse (46) entgegenzuwirken, die durch die Schnittpunkte der Schwenkachsen (14) und der Gelenkachsen (22) verlaufen;
- eine Einrichtung (26) zur Spannungserzeugung, eingefügt zwischen die Kraftaufnahmestücke (20), um auf diese entsprechend der genannten Längsachse (46) eine einstellbare bzw. verstellbare Zugkraft ausüben zu können, die einen aerodynamischen Auftrieb simuliert; und
- zwei Einrichtungen (28) zur Anwendung von Widerstandsmomenten, proportional zu den Schwenkwinkeln der Steuerflächen (12) um ihre Schwenkachsen (14), die aufgrund dieser Schwenkwinkel aerodynamische Momente simulieren, wobei diese Einrichtungen (28) eingefügt sind zwischen die Verankerungsstücke (16) und den Zwischenstücken (18).

2. Vorrichtung nach Anspruch 1, bei der die Einrichtung (26) zur Spannungserzeugung ein Spannschloss (52) umfasst, das mit Hilfe von zwei Gewinden (60), angebracht an zwei Teilen (56), die über Einrichtungen (62,64), welche eine Translation in der Längsachse (46) ermöglichen, mit den Kraftaufnahmestücken (20) verbunden sind und sich einer Drehung um diese Achse widersetzen, sowie zwei Stapel Tellerfedern (66), durch die die genannten Teile (56) sich auf den Kraftaufnahmestücken (20) abstützen.

3. Vorrichtung nach Anspruch 2, bei der das Spannschloss (52) Dehnungsmessstreifen (54) trägt.

4. Vorrichtung nach einem der vorangehenden Ansprüche, bei der die Antirotationseinrichtungen zwei Stäbe (24) umfassen, die sich beiderseits der Spannungserzeugungseinrichtung (26) befinden, parallel zu der genannten Längsachse (46) ausgerichtet sind und die Kraftaufnahmestücke (20) so verbinden, dass sie in wenigstens einem dieser Stücke frei gleiten können.

5. Vorrichtung nach einem der vorangehenden Ansprüche, bei der jede Einrichtung (28) zur Anwendung von Widerstandsmomenten zwei Elemente (70, 72) umfasst, die durch Elastomerblöcke (74) drehfest miteinander verbunden sind, wobei diese Elemente jeweils in Bezug auf eines der Verankerungsstücke (16) und in Bezug auf eines der Zwischenstücke (18) rotationsblockiert sind.

6. Vorrichtung nach Anspruch 5, bei der die beiden Elemente einen zentralen Block (70) und einen Außenrahmen (72) umfassen, beide von quadratischem Querschnitt, winkelmäßig um 45° versetzt in einer neutralen Stellung der Einrichtung (28) zur Anwendung von Widerstandsmomenten, in der kein Moment angewendet wird, wobei vier Elastomerblöcke (74) von dreieckiger Form eingefügt sind zwischen den Außenrahmen und den zentralen Block.

7. Vorrichtung nach Anspruch 6, bei der die Verankerungsstücke (16) Lagerzapfen (34) umfassen, zentriert auf die Schwenkachsen (14), wobei die zentralen Blöcke (70) an den Enden dieser Lagerzapfen befestigt sind, die Zwischenstücke (18) die Form von Ringen aufweisen und auf die Lagerzapfen montiert sind, und die Außenrahmen (72) drehfest mit den Zwischenstücken verbunden sind.

8. Vorrichtung nach Anspruch 7, bei der die ringförmigen Zwischenstücke (18) zwei Abflachungen (38) umfassen, parallel und entgegengesetzt, aus denen Stifte (40) austreten, ausgerichtet entsprechend den Gelenkachsen (22), wobei die Kraftaufnahmestücke (20) gabelförmig sind und zwei parallele Platten (44) umfassen, deren Enden schwenkbar auf die genannten Stifte montiert sind.

9. Vorrichtung nach einem der vorangehenden Ansprüche, bei der die Verankerungsstücke U-förmige Teile (30) umfassen, die rittlings auf die Steuerflächen montiert werden können mit kalibrierten Schrauben (32), die diese U-förmigen Teile durchqueren, um sich mit ihren Enden auf den Steuerflächen abzustützen.
